# FASCICULE DE BREVET EUROPEEN

(11) **EP 2 296 007 B1**
(45) Date de publication et mention de la délivrance du brevet: **21.10.2015**
(21) Numéro de dépôt: 10175697.1
(22) Date de dépôt: 08.09.2010
(51) Int. Cl.: G01S 13/93, G01S 13/44, G01S 13/48, G01S 13/42

(54) **Radar à agilité de faisceau, notamment pour la fonction de détection et d'évitement d'obstacles**
Radar mit Strahlagilität für Erkennung und Vermeidung von Hindernissen
Radar with beam agility, in particular for the function of detecting and avoiding obstacles

(30) Priorité: 15.09.2009 FR 0904395
(43) Date de publication de la demande: 16.03.2011
(73) Titulaire: Thales, 92200 Neuilly Sur Seine (FR)
(72) Inventeur: Cornic, Pascal, 29200, BREST (FR); Le Bihan, Patrick, 29870, LANNILIS (FR); Kemkemian, Stéphane, 75014, PARIS (FR)
(74) Mandataire: Lucas, Laurent Jacques

(56) Documents cités:
- EP-A1- 0 568 427
- FR-A1- 2 741 453
- FR-A1- 2 913 774
- GB-A- 2 228 387
- US-A- 3 364 484
- US-A- 4 336 540
- LE CHEVALIER F: "Space-Time Transmission and Coding for Airborne Radars", LEIDA-KEXUE-YU-JISHU = RADAR SCIENCE AND TECHNOLOGY,, vol. 6, no. 6, 1 décembre 2008 (2008-12-01), pages 411-421, XP009130674, ISSN: 1672-2337
- CHEVALIER F L ET AL: "Coloured transmission for radar active antenna", REE: REVUE GENERALE DE L'ELECTRICITE ET DE L'ELECTRONIQUE, REVUE GENERALE DE L'ELECTRICITE S.A, FR LNKD- DOI:10.3845/REE.2005.024, no. 6, 1 mars 2005 (2005-03-01), pages 48-52, XP001536744, ISSN: 1265-6534

## Description

La présente invention concerne un radar à agilité de faisceau. Elle s'applique notamment pour la fonction de détection et d'évitement d'obstacles.

La réalisation d'une fonction radar de détection d'obstacles aériens non coopérative pour aéronefs, en particulier pour des drones, est essentielle pour permettre l'insertion d'aéronefs autopilotés dans le domaine aérien non ségrégué. Elle participe à la fonction de détection et d'évitement d'obstacles connue sous le nom de « Sense and Avoid ».

Un tel radar doit disposer d'un très large champ d'observation, typiquement ±110° en azimut et ±15° en élévation, et doit être capable de balayer l'espace en un temps très court, compte tenu du temps nécessaire pour engager une manoeuvre d'évitement en cas de risque de collision. Ces caractéristiques correspondent approximativement à la capacité d'observation de l'environnement d'un pilote « humain ».

Pour des raisons de bilan de portée par temps de pluie, de disponibilité de composants hyper-fréquence à bas coût, et de facilité d'intégration sur le porteur, un tel radar est avantageusement en bande X.

Pour une telle application, Il est intéressant d'utiliser une antenne ou plusieurs antennes à champ large en émission, et de former en réception de multiples faisceaux simultanément dans le domaine éclairé. Cette solution est classiquement mise en oeuvre à l'aide de réseaux d'antenne dont les diagrammes doivent avoir une directivité suffisante pour localiser les cibles avec une bonne précision. Cette directivité est typiquement meilleure que 10° dans les deux plans. De plus, les diagrammes d'antenne doivent présenter des lobes secondaires les plus bas possibles pour rejeter le fouillis de sol, en particulier lors des phases de vol à basse altitude. Par ailleurs, la surface de l'antenne doit être suffisante pour assurer le bilan de portée avec une puissance d'émission raisonnable qui est en règle générale de l'ordre de 20 watt. En plus de ces contraintes techniques, le radar doit pouvoir être implanté sur différents types d'aéronefs, et les contraintes de volume d'électronique et de surface disponible pour l'antenne sont extrêmement fortes. Enfin, le coût global de l'électronique doit être minimisé.

L'enjeu est ainsi de définir une architecture d'antenne radar et un traitement associé permettant d'obtenir des diagrammes de bonne qualité, tout en minimisant le volume de l'électronique et la surface d'antenne à implanter. Des objectifs prioritaires à prendre en compte pour définir un tel radar sont notamment les suivants :
- Obtenir une large couverture instantanée du domaine d'observation grâce à un ou plusieurs faisceaux larges en émission, en association à de la formation de faisceaux en réception ;
- Faciliter l'intégration en minimisant la surface d'antenne tout en préservant le bilan de portée et en restant sur des puissances d'émission raisonnables, par exemple dans la classe 20 watt ;
- Assurer une directivité suffisante pour séparer les cibles et pour réduire le retour de fouillis de sol dans le lobe principal, par exemple dans la classe 10°ou moins ;
- Minimiser les lobes secondaires pour limiter au maximum le retour de sol ;
- Minimiser le nombre de voies d'émission et de réception pour réduire le coût du dispositif ;
- Choisir une architecture souple susceptible de supporter des modifications des spécifications ;

Pour des problématiques du même type, les techniques de balayage électronique ou de commutation de faisceau à l'émission associées à de la formation de faisceau par le calcul en réception sont généralement mises en oeuvre, en utilisant des antennes réseau, actives ou non. Malheureusement, pour garantir un échantillonnage spatial non ambigu dans un large domaine, les sources élémentaires constituant le réseau doivent être distantes les unes les autres d'une fraction de longueur d'onde. En considérant une antenne d'ouverture 10° dans les deux plans, le nombre de voies nécessaires est ainsi de l'ordre de 100, ce qui n'est pas envisageable pour une application de type « sense and avoid », pour des raisons de coût et de complexité. Par ailleurs une telle solution mobiliserait une surface d'implantation continue de l'ordre de 20 cm par 20 cm par panneau d'antenne, ce qui n'est pas compatible avec tous les porteurs, d'autant plus que deux panneaux sont nécessaires pour couvrir le domaine azimut complet selon l'angle +/- 110°.

Il serait possible d'utiliser des réseaux lacunaires, mais compte tenu des exigences sur le niveau des lobes secondaires d'antenne, le nombre de voies resterait très élevé, typiquement de l'ordre de 50. Par ailleurs, cette solution ne permet pas une intégration plus facile sur le porteur, dans la mesure où la surface continue mobilisée reste inchangée pour une même ouverture d'antenne.

Il serait encore possible d'utiliser un réseau d'antennes à multiples accès en entrée/sortie, de type MIMO, associé à une émission colorée. Les principes de l'émission colorée sont notamment décrits dans l'article de François Le Chevalier : « Space-time transmission and coding for airborne radars » publié dans Radar Science and Technology, volume 6, décembre 2008. Cependant ce type de dispositif présente les inconvénients suivants :
- Le réseau émission couvrant simultanément un grand domaine en élévation, il est nécessaire d'alimenter chacune des sources du réseau d'émission avec un signal codé, les codes devant être tous orthogonaux entre eux. L'électronique nécessaire et le traitement associé sont donc complexes, et ceci d'autant plus que la dimension du réseau est importante ;
- La mise en oeuvre de ces codes s'effectue au détriment de la résolution distance, ce qui est gênant en particulier lorsque la détection de la cible doit s'effectuer en contraste par rapport au fouillis de sol.

Un document US 4 336 540 décrit un système radar, pour la surveillance et la poursuite de cibles, comportant deux réseaux d'émission linéaires et orthogonaux.

Un but de l'invention est notamment de permettre la réalisation d'un radar prenant en compte tout ou partie des objectifs prioritaires cités précédemment. A cet effet, l'invention a pour objet un dispositif radar comportant une antenne comprenant au moins deux réseaux linéaires d'éléments rayonnants et orthogonaux entre eux, un premier réseau étant utilisé pour focaliser un faisceau d'émission dans un premier plan et un second réseau étant utilisé pour focaliser un faisceau de réception dans un deuxième plan, orthogonal au premier plan.

La focalisation du faisceau est par exemple obtenue dans le premier plan par émission colorée suivie d'une formation de faisceau par le calcul en réception, et en ce que la focalisation du faisceau est obtenue dans le deuxième plan par formation de faisceau par le calcul en réception.

Dans un mode de réalisation particulier, l'émission colorée est réalisée en regroupant des sous-réseaux d'antenne à l'émission de façon à former une voie somme et une voie différence en réception selon la technique monopulse.

Le premier plan est par exemple le plan d'élévation et le deuxième plan est le plan azimut.

Dans ce cas le premier réseau étant disposée sensiblement verticalement, un premier sous-réseau est par exemple formé de la partie haute de ce réseau et un deuxième sous-réseau est formé de sa partie basse. L'émission colorée peut être effectuée à l'aide d'un code de Barker. Dans ce cas, un code de Barker direct est par exemple émis sur le premier sous-réseau et le même code inversé est émis sur le deuxième sous-réseau. Dans un autre mode de réalisation possible, l'émission colorée est effectuée à l'aide d'un code de fréquence F1, F2. Le codage en fréquence consiste par exemple à émettre le signal d'émission à une fréquence donnée F1 sur le premier sous-réseau et à émettre le signal d'émission à une fréquence différente F2, ces deux fréquences étant orthogonales sur la durée d'une impulsion d'émission.

Avantageusement, un dispositif radar selon l'invention comporte par exemple au moins un réseau supplémentaires d'éléments rayonnants pour focaliser un faisceau d'émission sensiblement parallèle au premier réseau, les différents faisceaux d'émission ayant des directions différentes, chaque faisceau étant dédié à une partie du domaine angulaire à couvrir.

Le deuxième réseau comporte par exemple au moins deux lignes de d'éléments rayonnant formant un interféromètre ambigu en élévation, l'ambiguïté étant levée en focalisant le faisceau d'émission dans la direction de visée.

La focalisation peut être obtenue dans un plan par balayage électronique en émission et dans l'autre plan par formation de faisceau par le calcul en réception.

La partie d'émission et de réception est par exemple réalisée en circuit imprimé multicouches, les éléments rayonnants étant gravés sur l'une des faces du circuit, les composants actifs étant montés sur l'autre face, les éléments d'interconnexion et de distribution étant réalisés sur les couches interne du circuit imprimé.

D'autres caractéristiques et avantages de l'invention apparaîtront à l'aide de la description qui suit faite en regard de dessins annexés qui représentent :
- la figure 1, le principe de réalisation d'une antenne utilisée dans un radar selon l'invention ;
- la figure 2, le principe de réalisation d'un système d'émission et de réception utilisé dans un radar selon l'invention ;
- la figure 3, un exemple de réalisation d'un radar selon l'invention ;
- la figure 4, un mode de réalisation possible de la partie émission de l'exemple de réalisation précédent ;
- la figure 5, un mode de réalisation possible de la partie réception et traitement de l'exemple de réalisation précédent ;
- la figure 6, un autre exemple de réalisation d'un radar selon l'invention.

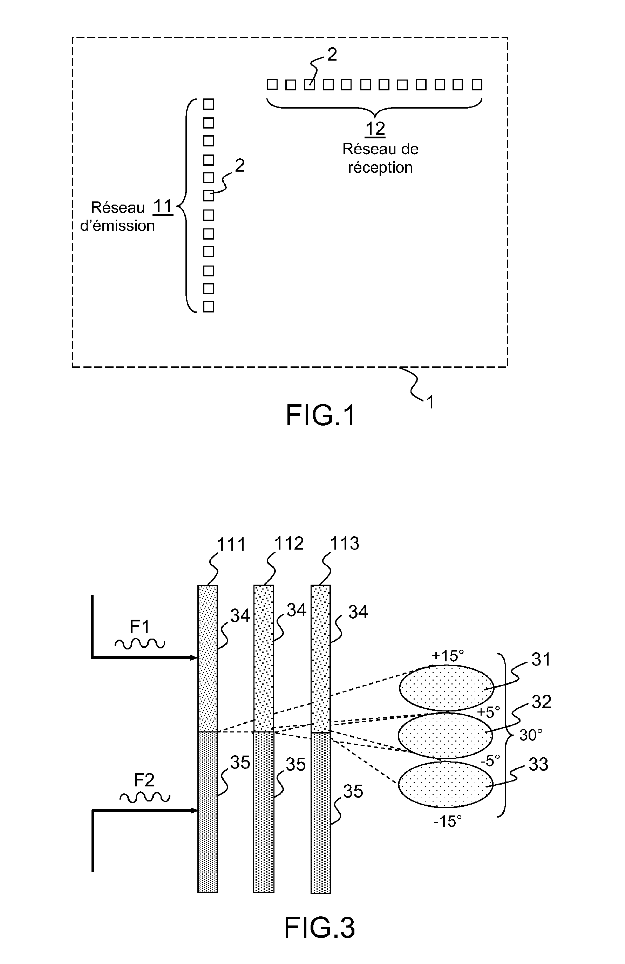

La figure 1 présente le principe de réalisation d'une antenne 1 utilisée dans un radar selon l'invention. Cette antenne comporte deux réseaux 11, 12 d'éléments rayonnant 2, chacun formant une source élémentaire à l'émission et un récepteur élémentaire à la réception. Ils sont réalisés dans une même technologie, ce sont par exemple des pastilles métalliques, encore appelées « patch ».

Ces deux réseaux 11, 12 sont linéaires et orthogonaux entre eux. Un réseau 11 est utilisé pour l'émission et l'autre réseau 12 est utilisé pour la réception. Plus particulièrement, le premier réseau 11 est utilisé pour focaliser le faisceau d'antenne dans un plan à l'émission, par formation de faisceau par le calcul. Le deuxième réseau 12 est utilisé pour focaliser le faisceau d'antenne à la réception dans le plan orthogonal au plan précédent, par formation de faisceau par le calcul.

Compte tenu des domaines de couverture respectifs demandés, +/- 110° en azimut et +/- 15° en site, au moins un réseau vertical est utilisé en émission, au moins un réseau horizontal est utilisé en réception. Sous sa forme la plus simple, telle que représentée par la figure 1, l'antenne réseau 1 comporte donc un réseau 11 en colonne pour l'émission, disposé verticalement, et un réseau 12 en ligne pour la réception, disposé horizontalement. Les réseaux 11, 12 peuvent être éloignés l'un de l'autre et placés de façon quelconque pourvu que les directions de visée des éléments rayonnants 2 soient proches et leurs diagrammes de rayonnement voisins.

Avantageusement, le deuxième réseau 12 comporte au moins deux lignes de d'éléments rayonnant 2 formant un interféromètre ambigu en élévation, l'ambiguïté étant levée en focalisant le faisceau d'émission dans la direction de visée souhaitée.

Les réseaux d'antenne 11, 12 peuvent avantageusement être en circuit imprimé, permettant ainsi une réalisation à faible coût.

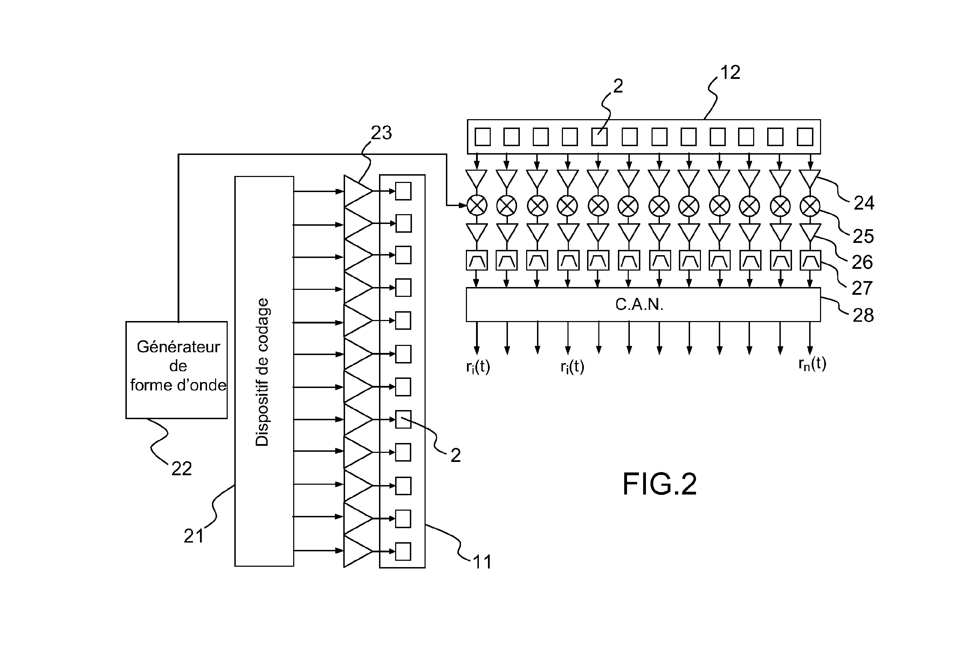

La figure 2 présente par un schéma synoptique le principe de réalisation d'un système d'émission et de réception d'un radar selon l'invention, utilisant une antenne réseau du type de celle présentée en figure 1. Dans l'exemple de la figure 2, le radar comporte :
- une antenne composée au moins d'un réseau linéaire vertical 11 en émission et au moins d'un réseau linéaire horizontal 12 en réception, orthogonal au réseau 11 d'émission, l'antenne d'émission permettant de focaliser le faisceau dans le plan d'élévation tandis que l'antenne de réception focalise le faisceau dans le plan d'azimut ;
- un dispositif de codage des fréquences 21 permettant d'effectuer une émission colorée dans le plan élévation pour former un faisceau somme et un faisceau différence, selon la technique connue du monopulse de phase, et de la formation de faisceau par le calcul (FFC) en réception, les diagrammes d'antennes résultant d'émission et de réception étant notamment optimisés pour couvrir le domaine de veille et minimiser le fouillis de sol intercepté par l'antenne.

Le radar comporte donc un générateur de forme d'onde 22 qui alimente le dispositif de codage 21. A partir de l'onde fournie par le générateur 22, le dispositif de codage fournit à chaque source élémentaire 2 un signal codé en fréquence pour former une émission colorée selon une technique connue par ailleurs. Une émission dite colorée assigne à chaque direction du secteur de surveillance une loi d'éclairement qui lui est propre permettant de caractériser chaque écho selon sa provenance.

Avant d'être transmis aux sources élémentaires 2, les signaux issus du dispositif de codage 21 sont amplifiés par des amplificateurs de puissance 23.

A la réception, les signaux reçus par les éléments d'antenne 2 du réseau de réception 12 sont par exemple amplifiés par un amplificateur faible bruit 24. Le système de réception comporte autant de voies qu'il y a d'éléments 2. Les signaux ainsi reçus sur chaque voie sont transposés à une fréquence intermédiaire au moyen d'un mélangeur 25. Un signal reçu sur une voie est ainsi par exemple mélangé avec la fréquence fournie par le générateur de forme d'onde 22. Un signal élémentaire de réception transposé est par ensuite amplifié par un amplificateur faible bruit 26 puis filtré par un filtre 27 avant d'être numérisé par un convertisseur analogique-numérique 28. En sortie d'un ou plusieurs convertisseurs 28, on obtient N signaux de réception élémentaire numérisés r₁(t), ... rᵢ(t), .... r_{N}(t), N étant le nombre d'éléments d'antennes 2. Un faisceau de réception est alors formé par le calcul à partir de ces valeurs r₁(t), ... rᵢ(t), .... r_{N}(t).

La figure 3 illustre un premier exemple de réalisation d'un système d'émission dans un radar selon l'invention basé sur le principe de réalisation tel qu'illustré par la figure 2. Dans cet exemple, on scinde le domaine à couvrir dans le plan élévation en plusieurs sous-domaines dans lesquels on forme, par exemple par émission colorée, un faisceau somme et un faisceau différence. A titre d'exemple, pour un domaine élévation à couvrir de 30°, on définit trois sous-domaines de 10°, les axes de visée de ces sous-domaines étant respectivement placés à -10 °, 0° et +10° par exemple.

L'exemple de réalisation de la figure 3 couvre donc un domaine d'élévation de 30° regroupant trois sous-domaines 31, 32, 33 de 10° chacun. Chaque sous-domaine est couvert par une antenne colonne 111, 112, 113 du type de l'antenne réseau 11 illustrée par la figure 1. Les trois antennes présentent chacune une ouverture angulaire de 10° et sont dépointées entre elles de 10°, ainsi une première antenne 111 couvre un secteur angulaire en élévation compris entre +5° et +15°, une deuxième antenne 112 couvre un secteur compris entre -5° et +5° et une troisième antenne 113 couvre un secteur compris entre -15° et -5°. En d'autres termes, chaque antenne 111, 112, 113 présente un faisceau d'émission couvrant un des secteurs précités, les axes des faisceaux étant décalés angulairement.

Les sous-domaines peuvent être couverts séquentiellement, ou simultanément, en affectant par exemple à chaque secteur angulaire 31, 32, 33 un plan de fréquence différent.

La coloration de l'espace est par exemple effectuée de façon très simple en émettant sur la moitié haute 34 de chaque antenne un signal sinusoïdal de fréquence F1 et en émettant sur la moitié basse 35 de chaque antenne un signal sinusoïdal de fréquence F2, la partie haute formant un sous-réseau et la partie basse formant un autre sous-réseau, les deux fréquences F1 et F2 étant orthogonales sur la durée d'une impulsion d'émission. A la réception, il suffit de corréler le signal écho comprenant les deux composantes avec deux sinusoïdes de fréquences F1 et F2, une composante correspondant au signal émis par la partie haute d'une antenne et une composante correspondant au signal émis par la partie basse d'une antenne. Il est ensuite possible de former les voies monopulse somme Σ et différence Δ dans le plan d'élévation sur chacune des sources 2 du réseau de réception. La voie somme Σ correspond à la somme les signaux de fréquences F1 et F2, elle est notée symboliquement Σ = F1 + F2. La voie différence réalise la différence entre les signaux de fréquence F1 et les signaux de fréquence F2, elle est notée symboliquement Δ = F1 - F2.

Dans le cas d'une émission pulsée utilisant des impulsions de durée T, les conditions d'orthogonalité entre les deux sinusoïdes de fréquence F1 et F2 sont respectées si F1 - F2 = k / T, k est un entier relatif non nul.

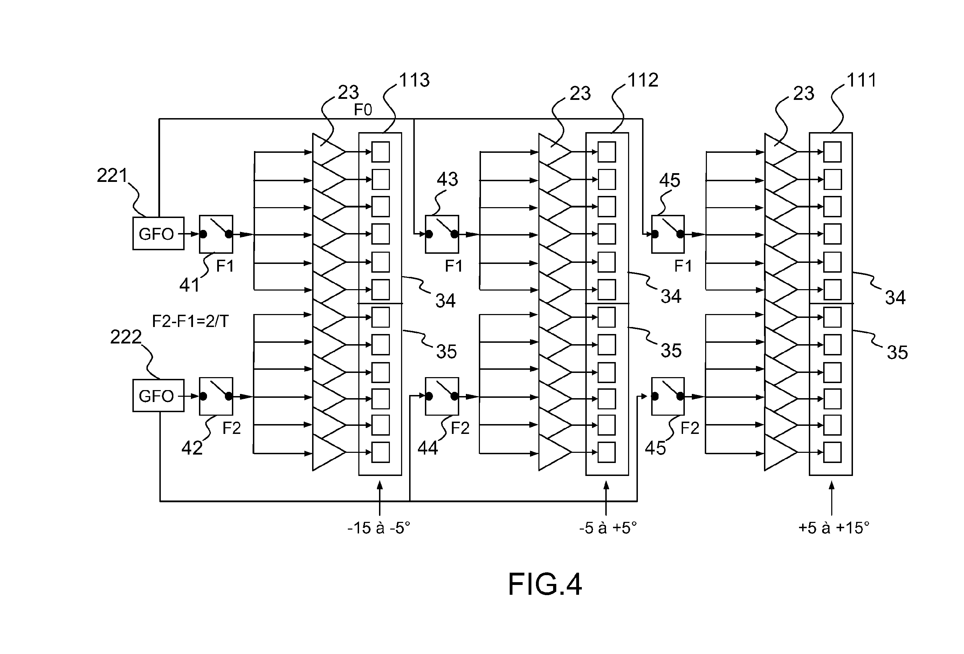

La figure 4 illustre un mode de réalisation possible du système présenté par la figure 3. Ce mode de réalisation reprend l'architecture du système présenté en figure 2. Chaque source des antennes réseau 111, 112, 113 est alimentée par un amplificateur de puissance 23. Dans ce mode de réalisation le dispositif de codage est simplifié et est remplacé par la génération de deux fréquences F1, F2 affectées respectivement aux parties hautes et basses des antennes. Le générateur de forme d'onde 22 de la figure 2 est alors remplacé par deux générateurs de formes d'onde 221, 222 délivrant respectivement la fréquence F1 et la fréquence F2. Le premier générateur 221 alimente les amplificateurs 23 des parties hautes des antennes 111, 112, 113 et le deuxième générateur 222 alimente les amplificateurs 23 des parties basses des antennes. Dans cet exemple de mise en oeuvre, la grandeur k ci-dessous est égale à 2, c'est-à-dire que F1 - F2 = 2 / T.

Un commutateur 41, 42, 43, 44, 45, 46 est par exemple placé entre un générateur et les amplificateurs qu'il alimente, permettant d'effectuer des émissions séquentielles ou simultanés dans les différents sous-domaines 31, 32, 33 couverts par les antennes.

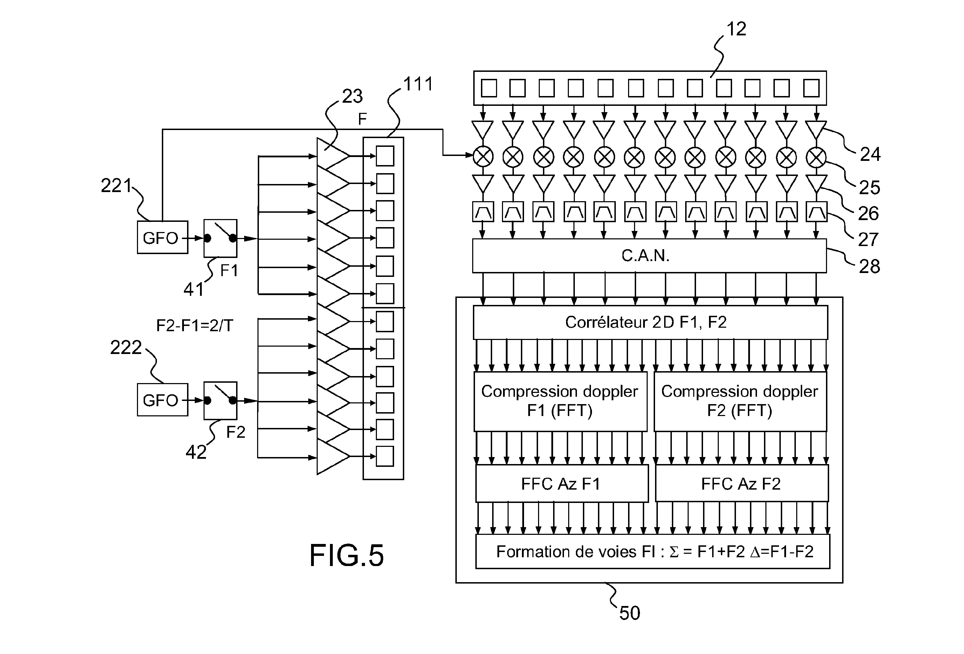

La figure 5 illustre la partie réception, et plus particulièrement le traitement, du système présenté aux figures 3 et 4, seule une antenne réseau d'émission 111 et ses circuits d'alimentation étant représentés. Les circuits de réception 24, 25, 26, 27, 28 ainsi que l'antenne réseau de réception 12 sont ceux du système d'émission et de réception présenté par la figure 2. Les signaux numériques r₁(t), ... rᵢ(t), .... r_{N}(t) délivrés par le convertisseur analogique-numérique 28 sont traités par des moyens de traitement 50. Chaque signal numérique rᵢ(t) comporte une série d'échantillons représentant le signal d'écho reçu sur la source 2 correspondante, d'ordre i. Ce signal écho comporte lui-même une composante à la fréquence F1 et une composante à la fréquence F2.

Les moyens de traitement 50 effectuent, de façon connue, une corrélation des signaux numériques avec deux sinusoïdes numérisées, de fréquences F1 et F2. Puis une compression Doppler est effectuée par transformée de Fourrier rapide (FFT) pour les signaux à la fréquence F1 et pour les signaux à la fréquence F2 issus de l'étape de corrélation. Une formation de faisceau par le calcul (FFC) est effectuée sur les signaux à F1 et sur les signaux à F2 pour obtenir des faisceaux de réception dans le plan d'azimut. Les signaux à F1 et à F2 sont par ailleurs utilisés pour former les voies somme et différence. Les FFT, FFC ainsi que les sommes et différences sont effectuées pour chaque signal rᵢ(t).

Dans une variante de réalisation, le partage du domaine d'émission en plusieurs faisceaux peut s'effectuer à l'aide d'un unique réseau de déphaseurs, le faisceau étant pointé de façon électronique et séquentiellement selon les directions correspondant aux différents secteurs angulaires 31, 32, 33 à couvrir. Les déphaseurs appliquent une valeur de déphasage fixe, les différents pointages étant obtenus par commutation de lignes hyperfréquence à l'aide de diodes PIN par exemple. Le traitement en réception reste inchangé et reste conforme au schéma de la figure 5. En particulier la formation des voies somme et delta reste alors inchangée.

Dans cette variante de réalisation, une seule antenne réseau est utilisée au lieu de trois. Le réseau d'émission est par exemple réalisé en technologie hyperfréquence multicouche, un face du circuit imprimé étant utilisée pour les éléments rayonnants 2 et la face opposée étant utilisée pour monter les éléments actifs hyperfréquence, notamment les amplificateurs de puissance et les diodes PIN, les couches internes du circuit imprimé étant utilisées pour les différentes lignes de distribution et de déphasage. Le réseau de réception utilise par exemple le même type de technologie. Cette technologie s'applique par ailleurs à d'autres modes de réalisation, notamment le mode de réalisation décrit par la figure 4.

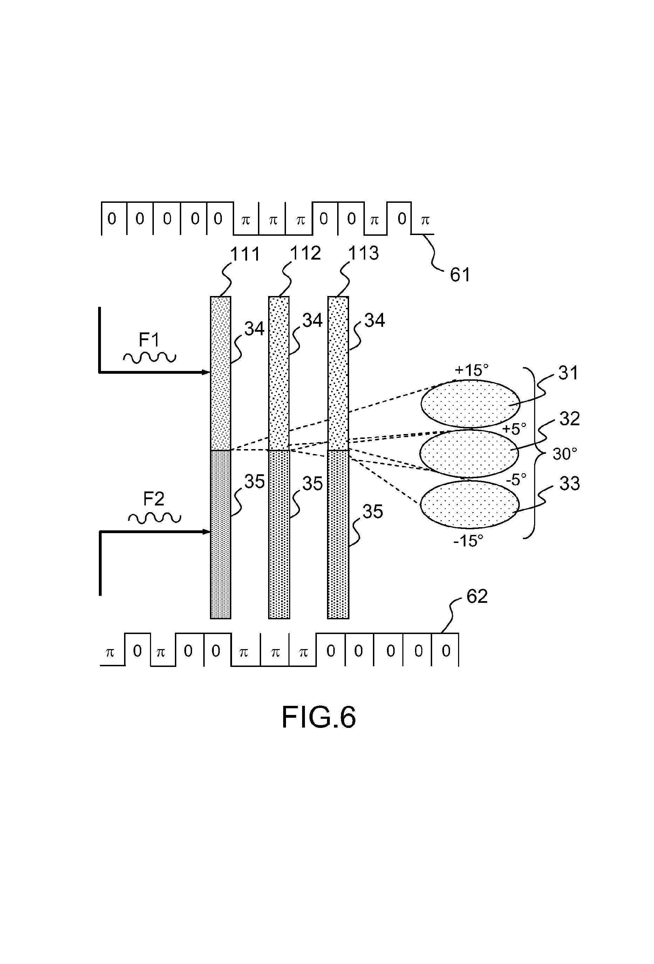

La figure 6 illustre un autre mode de fonctionnement possible d'un radar selon l'invention avec l'utilisation de trois antennes 111, 112, 113 du type de la figure 3 couvrant chacune un sous-secteur angulaire 31, 32, 33, l'ensemble couvrant par exemple un secteur de 30° environ. Dans cette solution, le mode de coloration de l'émission est différent. L'émission colorée n'est plus obtenue par un code de fréquence mais est effectuée à l'aide d'un code de Barker. Plus précisément, un code de Barker direct 61 est appliqué sur les signaux émis par chaque demi-antenne haute 34 et par le même code inversé, ou retourné, est appliqué sur les signaux émis par chaque demi-antenne basse 35, et cela pour chacune des trois antennes utilisées 111, 112, 113.

Le traitement en réception reste inchangé, la corrélation en réception étant simplement adaptée au code de Barker. La coloration par code de Barker peut aussi être utilisée dans une variante de réalisation utilisant un réseau de déphaseurs pour générer les différents sous-faisceaux d'émission.

Un radar selon l'invention présente notamment les avantages suivant :
- minimisation du nombre de voies d'émission et de réception, typiquement, pour former des faisceaux ayant une ouverture de l'ordre de 8 à 10° dans les deux plans, le nombre de voies est de l'ordre de 8 à 12 pour le réseau d'émission et pour le réseau de réception ;
- regroupement possible des voies d'émission en deux sous réseaux, simplification des circuits électroniques et des traitements associés, et limitation du nombre de composants ;
- facilité d'intégration sur le porteur, les antennes d'émission et de réception étant de formes linéaires, la surface du panneau rayonnant est minimisée, par ailleurs, les deux antennes réseaux peuvent être physiquement séparées et chacune de ces antennes peut avoir une longueur de l'ordre de 20 à 25 cm pour un radar fonctionnant en bande X ;
- performances accrues pour la détection des cibles à faible vitesse, en contraste sur fouillis de sol, le diagramme d'antenne résultant émission/réception étant optimisé, et grâce à la formation de faisceau par le calcul en réception, le pointage du faisceau est précis, le niveau des lobes secondaires pouvant être contrôlé par pondération en réception, le diagramme n'étant pas altéré par les effets de quantification de phase, et les traitements monopulse étant accessibles ;
- compatibilité avec une haute résolution en distance, dans le cas d'une coloration en fréquence ;
- compatibilité avec une haute résolution en Doppler, l'émission s'effectuant en champ large et permettant une veille simultanée sur l'ensemble du domaine, ce qui maximalise le temps d'observation sur les cibles, pour un temps de cycle d'observation donné ;
- mise en oeuvre simplifiée, l'émission colorée pouvant être implémentée sans déphaseurs hyper fréquence à pas variable, contrairement aux solutions conventionnelles ;
- absence d'effet de quantification de la phase, puisque la formation de faisceau s'effectue dans les deux plans en réception et en numérique ;
- compatibilité avec une forme d'onde continue ;
- compatibilité avec l'utilisation d'amplificateurs hyperfréquence de la classe 2 watt, disponibles sur étagère, à bas coût, à partir d'une émission sur 12 sources, la puissance émise peut atteindre dans ce cas de 24 watt moyens, ce qui est suffisant pour le bilan de portée demandé par la fonction sense and avoid, qui est typiquement de 6 Nm sur SER 1 m2.

## Revendications

1. Dispositif radar comportant une antenne comprenant au moins deux réseaux linéaires d'éléments rayonnants (2) et orthogonaux entre eux, un premier réseau (11) étant utilisé pour focaliser un faisceau d'émission dans un premier plan et un second réseau (12) étant utilisé pour focaliser un faisceau de réception dans un deuxième plan, orthogonal au premier plan, **caractérisé en ce que** ledit dispositif radar comporte en outre :
- un dispositif de codage (21, 41, 42) configuré pour, le premier réseau (11) étant formé de deux sous-réseaux (34, 35), affecter un code d'émission propre à chaque sous-réseau pour effectuer une émission colorée, la focalisation du faisceau étant obtenue dans le premier plan par ladite émission colorée ;
- des moyens configurés pour effectuer la focalisation du faisceau dans le deuxième plan par formation de faisceau par le calcul en réception,
- des moyens configurés pour former une voie somme et une voie différence en réception selon la technique monopulse, la voie somme correspondant à la somme des signaux émis par les deux sous-réseaux (34, 35) et la voie différence correspondant à la différence des signaux émis par les deux sous-réseaux.

2. Dispositif radar selon la revendication 1, **caractérisé en ce que** le premier plan est le plan d'élévation et le deuxième plan est le plan azimut.

3. Dispositif radar selon l'une quelconque des revendications précédentes, **caractérisé en ce que** le premier réseau (11) étant disposée sensiblement verticalement, un premier sous-réseau (34) est formé de la partie haute de ce réseau (11) et un deuxième sous-réseau est formé de sa partie basse (35).

4. Dispositif radar selon l'une quelconque des revendications précédentes, **caractérisé en ce que** l'émission colorée est effectuée à l'aide d'un code de Barker (61, 62).

5. Dispositif radar selon la revendication 4, **caractérisé en ce qu'**un code de Barker direct (61) est émis sur le premier sous-réseau (34) et le même code inversé (62) est émis sur le deuxième sous-réseau (35).

6. Dispositif radar selon l'une quelconque des revendications précédentes, **caractérisé en ce que** l'émission colorée est effectuée à l'aide d'un code de fréquence (F1, F2).

7. Dispositif radar selon la revendication 6, **caractérisé en ce que** le codage en fréquence consiste à émettre le signal d'émission à une fréquence donnée (F1) sur le premier sous-réseau et à émettre le signal d'émission à une fréquence différente (F2), ces deux fréquences étant orthogonales sur la durée d'une impulsion d'émission.

8. Dispositif radar selon l'une quelconque des revendications précédentes, **caractérisé en ce qu'**il comporte au moins un réseau supplémentaires (112, 113) d'éléments rayonnants pour focaliser un faisceau d'émission sensiblement parallèle au premier réseau (11, 111), les différents faisceaux d'émission ayant des directions différentes, chaque faisceau étant dédié à une partie du domaine angulaire à couvrir.

9. Dispositif radar selon l'une quelconque des revendications précédentes, **caractérisé en ce** le deuxième réseau (12) comporte au moins deux lignes de d'éléments rayonnant (2) formant un interféromètre ambigu en élévation, l'ambiguïté étant levée en focalisant le faisceau d'émission dans la direction de visée.

10. Dispositif radar selon l'une quelconque des revendications précédentes, **caractérisé en ce que** la focalisation est obtenue dans un plan par balayage électronique en émission et dans l'autre plan par formation de faisceau par le calcul en réception.

11. Dispositif radar selon l'une quelconque des revendications précédentes, **caractérisé en ce que** la partie d'émission (11, 111, 112, 113, 21, 22, 23) et de réception (12, 24, 25, 26, 27, 28) est réalisée en circuit imprimé multicouches, les éléments rayonnants (2) étant gravés sur l'une des faces du circuit, les composants actifs (23, 24, 25, 26, 27) étant montés sur l'autre face, les éléments d'interconnexion et de distribution (41, 42, 43, 44, 45, 46) étant réalisés sur les couches interne du circuit imprimé.

12. Dispositif radar selon l'une quelconque des revendications précédentes, **caractérisé en ce qu'**il équipe un aéronef pour une fonction de détection et d'évitement d'obstacle.

## Patentansprüche

1. Radamoruchtung, die eine Antenne umfasst, die wenigstens zwei lineare Gruppen von Strahlungselementen (2) orthogonal zueinander umfasst, wobei eine erste Gruppe (11) zum Fokussieren eines Sendestrahls in einer ersten Ebene benutzt wird und eine zweite Gruppe (12) zum Fokussieren eines Empfangsstrahls in einer zweiten Ebene orthogonal zur ersten Ebene benutzt wird, **dadurch gekennzeichnet, dass** die Radamoruchtung ferner Folgendes umfasst:
- eine Codiervorrichtung (21, 41, 42), die so konfiguriert ist, dass sie, wenn die erste Gruppe (11) von zwei Untergruppen (34, 35) gebildet wird, einen für jede Untergruppe spezifischen Sendecode zuordnet, um eine farbige Sendung zu bewirken, wobei die Fokussierung des Strahls in der ersten Ebene durch die farbige Sendung erhalten wird;
- Mittel, die zum Fokussieren des Strahls in der zweiten Ebene mittels Strahlbildung durch Berechnung beim Empfang konfiguriert sind;
- Mittel, die zum Bilden eines Summenkanals und eines Differenzkanals beim Empfang nach dem Monopulsverfahren konfiguriert sind, wobei der Summenkanal der Summe der von den zwei Untergruppen (34, 35) gesendeten Signale entspricht und der Differenzkanal der Differenz der von den zwei Untergruppen gesendeten Signale entspricht.

2. Radarvorrichtung nach Anspruch 1, **dadurch gekennzeichnet, dass** die erste Ebene die Elevationsebene ist und die zweite Ebene die Azimutebene ist.

3. Radarvorrichtung nach einem der vorherigen Ansprüche, **dadurch gekennzeichnet, dass**, wenn die erste Gruppe (11) im Wesentlichen vertikal angeordnet ist, eine erste Untergruppe (34) vom oberen Teil dieser Gruppe (11) gebildet wird und eine zweite Untergruppe vom unteren Teil (35) gebildet wird.

4. Radamoruchtung nach einem der vorherigen Ansprüche, **dadurch gekennzeichnet, dass** die farbige Sendung mit einem Barker-Code (61, 62) durchgeführt wird.

5. Radarvorrichtung nach Anspruch 4, **dadurch gekennzeichnet, dass** ein direkter Barker-Code (61) auf der ersten Untergruppe (34) gesendet wird und derselbe umgekehrte Code (62) auf der zweiten Untergruppe (35) gesendet wird.

6. Radarvorrichtung nach einem der vorherigen Ansprüche, **dadurch gekennzeichnet, dass** die farbige Sendung mit einem Frequenzcode (F1, F2) durchgeführt wird.

7. Radamoruchtung nach Anspruch 6, **dadurch gekennzeichnet, dass** die Frequenzcodierung im Senden des Sendesignals mit einer gegebenen Frequenz (F1) auf der ersten Untergruppe und im Senden des Sendesignals mit einer anderen Frequenz (F2) besteht, wobei die beiden Frequenzen über die Dauer eines Sendeimpulses orthogonal zueinander sind.

8. Radamoruchtung nach einem der vorherigen Ansprüche, **dadurch gekennzeichnet, dass** sie wenigstens eine zusätzliche Gruppe (112, 113) von Strahlungselementen zum Fokussieren eines Sendestrahls im Wesentlichen parallel zu der ersten Gruppe (11, 111) umfasst, wobei die verschiedenen Sendestrahlen unterschiedliche Richtungen haben, wobei jeder Strahl für einen Teil des abzudeckenden Winkelbereichs dediziert ist.

9. Radamoruchtung nach einem der vorherigen Ansprüche, **dadurch gekennzeichnet, dass** die zweite Gruppe (12) wenigstens zwei Reihen von Strahlungselementen (2) umfasst, die ein Interferometer bilden, dessen Elevation mehrdeutig ist, wobei die Mehrdeutigkeit durch Fokussieren des Sendestrahls in der Blickrichtung aufgehoben wird.

10. Radamoruchtung nach einem der vorherigen Ansprüche, **dadurch gekennzeichnet, dass** die Fokussierung in einer Ebene durch elektronisches Abtasten beim Senden und in der anderen Ebene durch Strahlformung durch Berechnung beim Empfang erhalten wird.

11. Radamoruchtung nach einem der vorherigen Ansprüche, **dadurch gekennzeichnet, dass** der Sendeteil (11, 111, 112, 113, 21, 22, 23) und der Empfangsteil (12, 24, 25, 26, 27, 28) als mehrschichtige gedruckte Schaltung produziert werden, wobei die Strahlungselemente (2) auf eine der Flächen der Schaltung geätzt werden, wobei die aktiven Komponenten (23, 24, 25, 26, 27) auf der anderen Fläche montiert sind, wobei die Verbindungs- und Verteilungselemente (41, 42, 43, 44, 45, 46) auf den inneren Schichten der gedruckten Schaltung produziert werden.

12. Radamoruchtung nach einem der vorherigen Ansprüche, **dadurch gekennzeichnet, dass** sie zur Installation in einem Luftfahrzeug für eine Hinderniserkennungs- und - vermeidungsfunktion vorgesehen ist.

## Claims

1. A radar device comprising an antenna comprising at least two linear arrays of radiating elements (2) orthogonal to each other, a first array (11) being used to focus a transmission beam in a first plane and a second array (12) being used to focus a reception beam in a second plane, orthogonal to said first plane, **characterised in that** said radar device further comprises:
- a coding device (21, 41, 42) configured, with said first array (11) being formed by two sub-arrays (34, 35), to assign a transmission code specific to each sub-array so as to carry out a coloured transmission, the focusing of the beam being obtained in said first plane by said coloured transmission;
- means configured to focus the beam in said second plane using beam formation by computation on reception;
- means configured to form a sum channel and a difference channel on reception according to the monopulse technique, said sum channel corresponding to the sum of the signals transmitted by said two sub-arrays (34, 35) and said difference channel corresponding to the difference in the signals transmitted by said two sub-arrays.

2. The radar device according to claim 1, **characterised in that** said first plane is the elevation plane and said second plane is the azimuth plane.

3. The radar device according to any one of the preceding claims, **characterised in that**, with said first array (11) being disposed substantially vertically, a first sub-array (34) is formed from the upper part of said array (11) and a second sub-array is formed from its lower part (35).

4. The radar device according to any one of the preceding claims, **characterised in that** said coloured transmission is carried out using a Barker code (61, 62).

5. The radar device according to claim 4, **characterised in that** a direct Barker code (61) is transmitted on said first sub-array (34) and the same code (62) inverted is transmitted on said second sub-array (35).

6. The radar device according to any one of the preceding claims, **characterised in that** said coloured transmission is carried out using a frequency code (F1, F2).

7. The radar device according to claim 6, **characterised in that** the frequency coding involves transmitting said transmission signal at a given frequency (F1) on said first sub-array and transmitting said transmission signal at a different frequency (F2), said two frequencies being orthogonal over the duration of a transmission pulse.

8. The radar device according to any one of the preceding claims, **characterised in that** it comprises at least one additional array (112, 113) of radiating elements for focusing a transmission beam substantially parallel to said first array (11, 111), the various transmission beams having different directions, each beam being dedicated to part of the angular field to be covered.

9. The radar device according to any one of the preceding claims, **characterised in that** said second array (12) comprises at least two rows of radiating elements (2) forming an interferometer that is ambiguous in elevation, the ambiguity being removed by focusing said transmission beam in the line of sight.

10. The radar device according to any one of the preceding claims, **characterised in that** focusing is obtained in one plane by electronic scanning on transmission and in the other plane by beam formation by computation on reception.

11. The radar device according to any one of the preceding claims, **characterised in that** the transmission part (11, 111, 112, 113, 21, 22, 23) and the reception part (12, 24, 25, 26, 27, 28) are produced as a multi-layer printed circuit, said radiating elements (2) being etched onto one of the faces of said circuit, the active components (23, 24, 25, 26, 27) being mounted on the other face, the interconnection and distribution elements (41, 42, 43, 44, 45, 46) being produced on the inner layers of said printed circuit.

12. The radar device according to any one of the preceding claims, **characterised in that** it equips an aircraft for an obstacle sense and avoid function.
